# EUROPEAN PATENT SPECIFICATION

(11) **EP 2 524 847 B1**
(45) Date of publication and mention of the grant of the patent: **19.04.2017**
(21) Application number: 11166822.4
(22) Date of filing: 20.05.2011
(51) Int. Cl.: B60T 7/22, B60R 21/36, B60W 30/08, B60R 19/20

(54) **Vehicle control arrangement**
Fahrzeugsteueranordnung
Agencement de contrôle de véhicule

(43) Date of publication of application: 21.11.2012
(73) Proprietor: Autoliv Development AB, 447 83 Vårgårda (SE)
(72) Inventor: Schock, Marc, 85757, Karlsfeld (DE); McCoy, William, 85221, Dachau (DE)
(74) Representative: Awapatent AB

(56) References cited:
- EP-A2- 1 176 062
- DE-A1-102004 057 604
- FR-A3- 2 887 669
- US-A1- 2006 085 131
- US-A1- 2006 271 258

## Description

### Technical Field of the Invention

The present invention relates to a vehicle control arrangement comprising a sensor system for detecting a collision or an expected collision, a control unit adapted to receive and process a signal from said sensor system, and a vehicle control means being connected to said control unit.

### Background Art

Motor vehicles are today normally provided with a number of safety devices, such as e.g. airbag arrangements to improve the vehicle safety. Furthermore the vehicle safety may be improved by means of a brake control device that activates the brake system of the vehicle upon detection of a collision in order to reduce the severity of a detected collision.

US 6267194 discloses a brake control device for mitigating the consequences of an accident in the case of a rear-on collision. In the case of a rear-on collision a braking signal initiating or continuing a braking operation is triggered in the vehicle hit at the rear. The braking signal is triggered if a comparison signal obtained from the acceleration sensors of an airbag system exceeds a given or calculated threshold value. The level of the comparison signal serves as a measure of the value of a braking signal to be generated, which determines the braking force.

However, there is a need to further improve the safety of vehicles, especially in a variety of vehicle impacts. Additionally, with respect to previously known solutions, it is desirable to achieve a robust and reliable, vehicle control arrangement not being complex.

EP 1 176 062 discloses a vehicle air bag system provided with an air bag that inflates and unfolds to cover the front pillars of the vehicle body when there is a risk of colliding with a pedestrian.

US 2006/0085131 discloses a path prediction system for a vehicle. A path prediction module determines predicted path estimations in response to data received from vehicle state sensors and vehicle tracking sensors.

### Summary of the Invention

It is an object of the present invention to provide an improved vehicle control arrangement.

This and other objects that will be apparent from the following summary and description are achieved by a vehicle control arrangement according to the appended claims.

According to an aspect of the present invention, there is provided a vehicle control arrangement comprising a sensor system for detecting a collision or an expected collision, a control unit adapted to receive and process a signal from said sensor system, and a vehicle control means being connected to said control unit, wherein the sensor system being adapted for detecting a pedestrian, a cyclist or an animal in front of the vehicle, the vehicle control arrangement further comprising a pedestrian, cyclist or animal protection arrangement being connected to the control unit, and the control unit being configured to, upon receipt of a signal from the sensor system indicative of a collision or an expected collision with a pedestrian, cyclist or animal, send an activation signal to each of the protection arrangement and the vehicle control means, thereby activating the protection arrangement and the vehicle control means.

When a pedestrian, cyclist or animal is detected by the sensor system a signal indicative of the detected object is thus sent to the control unit. The received signal is then processed by the control unit and if it is determined that an impact has occurred or will occur, an activation signal is sent to initiate activation of e.g a pedestrian protection arrangement. An activation signal is also sent to a control means of the vehicle. Hence, each of the protection arrangement and the vehicle control means is activated by an activation signal generated and sent by the control unit. The vehicle control arrangement provides for improved control of the vehicle in the event of a collision, and/or in the event of an expected collision, with e.g. a pedestrian in a robust and reliable manner. Furthermore, the risk of severe injuries to vehicle occupants and/or pedestrians may be significantly reduced by such a vehicle control arrangement. For instance, since the vehicle control means comprises a vehicle brake system, a braking operation is automatically initiated or continued upon detection of e.g. a pedestrian. Such a braking operation may reduce the vehicle speed before e.g. a pedestrian head is hit by the vehicle in the event of a collision. Furthermore, such a braking operation may reduce the risk for a subsequent collision with an object, such as e.g. a vehicle, pedestrian or a building.

The pedestrian, cyclist or animal protection arrangement comprises a pedestrian protection airbag covering at least a part of the vehicle windshield when inflated. Such an externally mounted airbag significantly reduces the risk for a pedestrian hit by the vehicle to be killed or seriously injured. The pedestrian protection airbag may also cover the windshield pillars of the vehicle when inflated. Alternatively, the pedestrian, cyclist or animal protection arrangement may comprise a pair of airbags, each of which is covering at least a part of a respective windshield pillar and/or a part of the windshield when inflated. Alternatively, or additionally the pedestrian, cyclist or animal protection arrangment may comprise other externally mounted airbag(s), such as e.g a bumper airbag and/or a front edge airbag. The pedestrian, cyclist or animal protection arrangement may comprise a hood lifter arrangement capable of lifting the vehicle hood a pre-determined distance when activated. Hence, a very efficient pedestrian protection arrangement may be achieved.

According to the invention the vehicle control means comprises a vehicle brake system. Activation of the vehicle control means thus implies braking of the vehicle. This embodiment has the advantage that a braking operation of the vehicle may be automatically initiated upon detection of a collision or an expected collision with e.g. a pedestrian. Hence, as soon as the pedestrian, cyclist or animal protection arrangement is activated full braking of the vehicle may be automatically initiated or continued. Such a braking operation of the vehicle is automatically initiated or continued e.g. as a response to, or even simultaneously as, the activation of a pedestrian protection arrangement. A robust and reliable vehicle control arrangement is thus achieved in a simple manner. Furthermore, the vehicle will then come to a stop independent of actions taken by the driver. The braking operation may thus reduce the vehicle speed before e.g. a pedestrian head will contact e.g. a pedestrian protection airbag, thereby reducing the risk of severe head injuries. Furthermore, a subsequent collision with an object, such as e.g. a pedestrian, a vehicle or a building, may be avoided. Hence, an efficient protection of pedestrians and occupants of the vehicle in the event of a collision is provided by such a vehicle control arrangement. Also, as soon as such a braking operation is initiated the vehicle braking lights will warn road-users behind the vehicle.

The sensor system is preferably a frontal impact sensor system which comprises at least one frontal impact sensor. The sensor system may comprise at least one impact sensor indicative of a collision with a pedestrian, a cyclist or an animal. Hence, the sensor system is capable of detecting that an impact with e.g. a pedestrian has occurred. The at least one impact sensor is preferably located at the front of the vehicle. The at least one impact sensor is preferably an accelerometer, such as a microelectromechanical systems (MEMS) based accelerometer. In one embodiment the sensor system comprises a number of such accelerometers located at the front of the vehicle. This embodiment has the advantage that a collision with e.g. a pedestrian can be detected in a very efficient and reliable manner.

Alternatively, or additionally, the impact sensor system may comprise a pre-crash sensor, i.e. a sensor indicative of an expected collision with e.g. a pedestrian, a cyclist or an animal located in front of the vehicle. Such a pre-crash sensor is thus capable of detecting an object, such as e.g. a pedestrian, cyclist or animal, located in front of and spaced from the vehicle.

In one embodiment the sensor system comprises a pre-crash sensor indicative of an expected collision with a pedestrian, cyclist or animal. Such a pre-crash sensor may e.g. be mounted on the exterior of the vehicle above the windshield. This embodiment has the advantage that the vehicle speed may be reduced by the vehicle brakes before the impact with e.g. a pedestrian. Consequently, the pedestrian might not strike the windshield or one of the windshield pillars as high up as he would if the vehicle brakes were not activated before the impact. Hence, the size of a pedestrian protection airbag can in this case be reduced, still providing sufficient protection. Especially, this is preferred if the airbag arrangement is mounted in a position where there is limited space, such as on the lower side of the hood. Such an pedestrian protection airbag could be half the size as to a normal-sized airbag and still reach the same purpose of covering the portions of the windshield and/or windshield pillars needed.

The at least one pre-crash sensor may be a vision camera. Preferably, the vision camera is active in the visible light wavelength range or in the infrared light wavelength range.

The vehicle control means may comprise a vehicle steering system in order to further improve the efficiency of the vehicle control arrangement. Activation of the vehicle control means may thus imply braking and/or steering of the vehicle.

The control unit may be configured to, upon receipt of a signal indicative of a collision or an expected collision with a pedestrian, cyclist or animal, simultaneously send an activation signal to each of the protection arrangement and the vehicle control means, thereby activating the protection arrangement and the vehicle control means simultaneously.

The control unit may comprise a restraint systems control unit and/or a brake control unit and/or a steering control unit.

The control unit may be the restraint system ECU (eletronic control system) of a vehicle, i.e. the ECU to which other restraint sytems, such as e.g. frontal airbags, side airbags and seat belt arrangements of the vehicle are connected. When an object is detected by the sensor system a signal is then sent to the restraint system ECU of the vehicle. The signal is processed by the restraint sytem ECU and if it is determined that an impact has occurred or will occur, a signal is sent to e.g. activation means of a pedestrian protection airbag arrangement and a vehicle brake system.

These and other aspects of the invention will be apparent from and elucidated with reference to the claims and the embodiments described hereinafter.

### Brief Description of the Drawings

The invention will hereafter be described in more detail and with reference to the appended drawings.
Fig. 1 illustrates schematically a vehicle control arrangement according to a first embodiment of the present invention.
Fig. 2 illustrates schematically a vehicle control arrangement according to a second embodiment of the present invention.
Fig. 3 illustrates schematically vehicle control arrangements according to further embodiments of the present invention.

### Detailed Description of Preferred Embodiments of the Invention

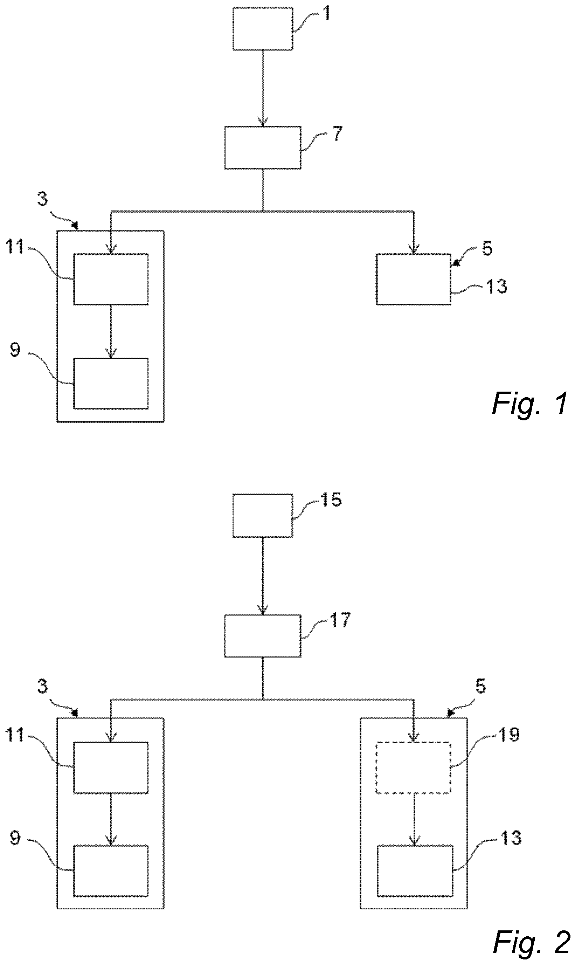

Fig. 1 illustrates schematically a vehicle control arrangement according to a preferred embodiment of the present invention. In this embodiment the vehicle control arrangement comprises a sensor system 1, a pedestrian protection airbag arrangement 3, a vehicle control means 5 in the form of a vehicle brake system 13 and an electronic control unit 7. The electronic control unit 7 is connected to each of the sensor system 1, the pedestrian protection airbag arrangement 3 and the vehicle brake system 13.

The sensor device 1 comprises a number of frontal impact sensors in the form of accelerometers (not shown) adapted to detect a collision with e.g. a pedestrian. In this embodiment the accelerometers are microelectromechanical systems (MEMS) based accelerometers which are indicative of a collision with e.g. a pedestrian, a cyclist or an animal. It is however realized that other types of sensors, such as e.g. pressure sensors and/or contact sensors may be used instead of or in combination with accelerometers. The accelerometers are mounted at the front of the vehicle to be operable to detect a collision with e.g. a pedestrian, located in front of the vehicle. Each individual accelerometer of the sensor device1 is connected to the control unit 7.

The pedestrian protection airbag arrangement 3 comprises an inflatable airbag 9 and an airbag inflator 11 for inflating the pedestrian protection airbag 9 in the event of a collision with e.g. a pedestrian. The pedestrian protection airbag 9 and the pedestrian airbag inflator 11 are mounted at the rear end of the vehicle hood adjacent to the lower end of the vehicle windshield. The pedestrian airbag arrangement 3 is activated by an activation signal received from the control unit 7. Hence, the airbag inflator 11 of the pedestrian protection arrangement 3 is arranged to, upon receipt of an activation signal, inflate the pedestrian protection airbag 9. When inflated the pedestrian protection airbag 9 covers part of the windshield and the windshield pillars (A-pillars) and thus prevents the pedestrian from directly impacting the windshield and/or its supporting structure, such as cowl area, roof area or A-pillars. Hence, the pedestrian protection airbag 9 protects an impacted pedestrian from being injured by stiff parts of the vehicle. Especially, the pedestrian protection airbag 9 may prevent severe or fatal head injuries.

The control unit 7 is adapted to receive and process signals from the impact sensor device 1 and is capable of deciding if a collision with e.g. a pedestrian has occurred. In this embodiment the control unit 7 is constituted by the main restraint ECU (electronic control unit) of the vehicle, i.e. the ECU to which other restraint systems, such as e.g. frontal airbags, side airbags and seat belt arrangements, are connected. The control unit 7 is connected to each of the pedestrian protection arrangement 3 and the vehicle brake system 13 and is configured to activate both the pedestrian protection airbag arrangement 3 and the vehicle brake system 13 as soon as a collision with e.g. a pedestrian is detected. The control unit 7 is connected to the vehicle brake system 13 in such a manner that the vehicle brakes are fully activated upon an activation signal sent from the control unit 7. The control unit 7 may be directly connected to the vehicle brake system 13, as indicated in Fig. 1. Alternatively, the control unit 7 may be connected to a brake control unit of the vehicle brake system 13. Thus, the vehicle brake system 13 may receive an activation signal directly from the control unit 7 or via a brake control unit. As soon as the vehicle brake system 13 receiv an activation signal, i.e. a braking signal, a braking operation is automatically initiated or continued. Hence, if it is determined that an impact between the vehicle and e.g. a pedestrian has occurred the vehicle brakes are automatically activated in order to reduce the vehicle speed.

The control unit 7 is connected to the pedestrian protection airbag arrangement 3 and is capable of sending an activation signal, i.e. a triggering signal, to the pedestrian protection airbag arrangement 3. In the event of a collision with e.g. a pedestrian the pedestrian protection airbag arrangement 3 receives an activation signal from the control unit 7. Upon receipt of such an activation signal the airbag inflator 11 is actuated and inflation of the pedestrian protection airbag 9 is initiated.

Optionally, the vehicle control arrangement may comprise an additional braking system connected to the control unit 7. For instance an additional braking system that uses a further friction contact between vehicle and road surface may be utilised. Such a further friction contact may e.g. be established by means of a moveable braking element arranged to, upon an activation signal from the control unit 7, be lowered down from the vehicle to which it is connected so that a gripping portion of the braking element is pressed against the road surface. Hence, an additional braking system may comprise a braking element, e.g. in the form of a braking rod having a gripping portion, operable to cause friction between the vehicle to which it is connected and a road surface, thereby applying a braking force to the vehicle.

In this embodiment the control unit 7 is configured to, upon detection of an impact with e.g. a pedestrian, simultaneously send a triggering signal to the pedestrian protection airbag arrangement 3 and a braking signal to the vehicle brake system 13, thereby activating the pedestrian protection airbag arrangement 3 and the vehicle brake system 13 simultaneously. Upon receipt of a signal indicative of a collision with e.g. a pedestrian, a cyclist or an animal from one or more of the accelerometers mounted at the front of the vehicle, activation signals are thus generated by the control unit 7 and sent to each of the pedestrian protection arrangement 3 and the vehicle brake system 13 at the same time. If a collision with a pedestrian, animal or cyclist occurs each of the pedestrian airbag and the vehicle brake system thus receives an activation signal simultaneously. Hence, upon detection of a collision with e.g. a pedestrian inflation of the pedestrian protection airbag 9 and braking of the vehicle is initiated simultaneously. Consequently, as soon as inflation of the pedestrian protection airbag is activated the vehicle speed will automatically be reduced. This has the advantage that as soon as a collision with a pedestrian is detected the vehicle speed will be reduced independent of whether the driver put his foot on the brake pedal or not. Hence, even if the driver for some reason put his foot on the accelerator pedal the vehicle speed will be reduced since the vehicle brake system is activated and automatic braking is thus initiated. The vehicle will thus come to a stop independent of the driver's skill, thus reducing the risks of a secondary impact. A subsequent collision with an object, such as a second pedestrian, may thus be avoided since the vehicle speed is reduced automatically as soon as the collision with the first pedestrian is detected.

Hereinafter a vehicle control arrangement according to a second embodiment will be described with reference to Fig. 2. Many features disclosed in the first embodiment are also present in the second embodiment with similar reference numerals identifying similar or same features. Having mentioned this, the description will focus on explaining the differing features of the second embodiment. As described hereinbefore the control unit is adapted to receive and process signals from a sensor system. The second embodiment differs in that the sensor system 15 comprises a vision-based pre-crash sensor instead of accelerometers as in the first embodiment. Such a pre-crash sensor system is indicative of an expected collision with e.g. a pedestrian located in front of the vehicle and thus enables to detect an expected collision with e.g. a pedestrian. The control unit 17 is adapted to receive and process signals from the pre-crash sensor system 15 and is capable of deciding if a collision with e.g. a pedestrian will occur in the near future. In this embodiment the sensor system 15 comprises a vision-based sensor in the form of an infrared camera (not shown), i.e. a camera which is operable in the infrared light wavelength range, mounted at the vehicle. Alternatively, the pre-crash sensor system may comprise a camera which is operable in the visible wavelength range.

The control unit 17 may be directly connected to the vehicle brakes 13. Alternatively, the control unit 17 may be connected to a brake control unit 19 of the vehicle brake system 13, as indicated in Fig. 2. Thus, the vehicle brakes 13 may receive an activation signal directly from the control unit 17 or via a brake control unit 19.

Upon detection of an expected collision with e.g. a pedestrian activation signals are sent from the control unit 17 to each of the pedestrian protection airbag arrangement 3 and the vehicle brake system 13 simultaneously. Upon detection of an expected collision with e.g. a pedestrian inflation of the pedestrian protection airbag 9 and a braking operation is initiated simultaneously. Hence, as soon as it is determined that an impact between the vehicle and e.g. a pedestrian will occur the vehicle brakes 13 are automatically activated in order to reduce the vehicle speed. This means that the vehicle speed will be reduced before the impact with the pedestrian and that the pedestrian therefore might not strike the windscreen or one of the A-pillars as high up as he would if the vehicle brakes were not activated before the impact. A smaller pedestrian protection airbag could thus be used which is preferred if the airbag arrangement is mounted in a position where there is limited space, such as on the lower side of the hood. Such an airbag could be half the size as to a normal-sized airbag and still reach the same purpose of covering the portions of the windscreen and A-pillars needed.

It will be appreciated that numerous modifications of the embodiments described above are possible within the scope of the appended claims.

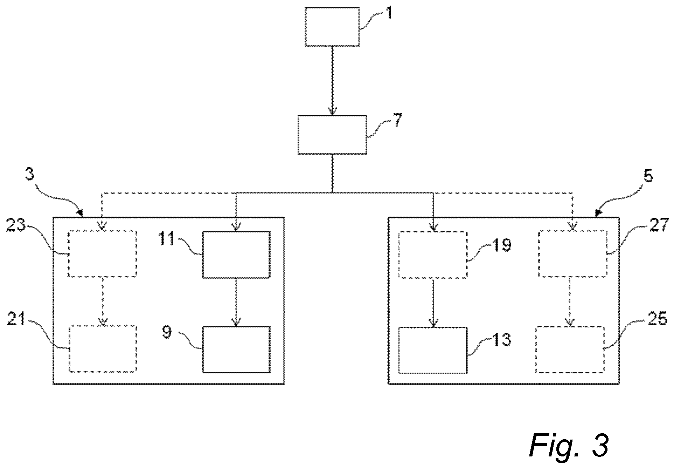

Hereinbefore it has been described that the pedestrian protection arrangement 3 comprises a pedestrian protection airbag 9. Alternatively, or additionally, the pedestrian protection arrangement 3 may comprise a hood lifter arrangement 21, as indicated in Fig. 3, which is activated upon detection of a collision or an expected collision with e.g. a pedestrian. Such a hood lifter arrangement 21 may be configured to, upon activation thereof, raise the rear part of the hood, thereby creating a clearance between the hood and underlying stiff parts, such as the engine block, in order to enable deformation of the hood by an impacting head. If a pedestrian head should hit the hood the head is then decelerated by the hood deformation and the risk of head injuries is thus significantly reduced. As illustrated in Fig. 3 the hood lifter arrangement 21 may be actuated by means of an activating means 23.

Alternatively, or additionally, the pedestrian protection arrangement 3 may comprise an externally mounted airbag in the form of a front edge airbag mounted in front of the vehicle and protecting a pedestrian in the event of a collision. Alternatively, or additionally, the pedestrian protection arrangement 3 may comprise an externally mounted airbag in the form of a bumper airbag covering at least a part of the vehicle bumper when inflated.

Hereinbefore it has been described that the vehicle control arrangement comprises a pedestrian protection airbag covering part of the windshield and the A-pillars. It is realized that numerous variations are possible as regards such a pedestrian protection airbag arrangement. For instance the pedestrian protection airbag arrangement may comprise a pair of airbags, one at each windshield pillar, instead of a single airbag 9.

Hereinbefore it has been described that the vehicle control means 5 of the vehicle control arrangement comprises a vehicle brake system 13 for controlling the movement of the vehicle. Alternatively, or additionally, the vehicle control means 5 of the vehicle control arrangement may comprise a vehicle steering mechanism 25, as illustrated in Fig. 3, for controlling the movement of the vehicle. Then, in case the sensor system 1 comprises accelerometers as described hereinbefore, automatic steering as soon as an impact is detected can be carried out. Alternatively, if the sensor system 15 comprises a pre-crash sensor as described hereinbefore, automatic steering before an impact between the vehicle and the detected object may be carried out. As illustrated in Fig. 3 the vehicle control arrangement may further comprise a steering control unit 27.

Hereinbefore it has been described that the control unit 7 is configured to, upon detection of an impact with e.g. a pedestrian, simultaneously send a triggering signal to the pedestrian protection airbag arrangement 3 and a braking signal to the vehicle brake system 13. It is however realized that the control unit may be configured to send a signal to each of a pedestrian protection airbag arrangement and a vehicle control means with a short time delay, such as e.g. 100 milliseconds. The control unit may thus be configured to send an activation signal to a vehicle control means e.g. within 20 milliseconds, or within 100 milliseconds, or within1 second, after an activation signal to a pedestrian protection arrangement has been sent from the control unit.

It is realized by a person skilled in the art that features from various embodiments disclosed herein may be combined with one another in order to provide further alternative embodiments.

## Claims

1. A vehicle control arrangement comprising
a sensor system (1; 15) for detecting a collision or an expected collision, the sensor system (1; 15) being adapted for detecting a pedestrian, a cyclist or an animal in front of the vehicle,
a control unit (7; 17) adapted to receive and process a signal from said sensor system (1; 15), and
a pedestrian protection airbag (9) covering at least a part of the vehicle windshield supporting structure when inflated and being connected to the control unit (7; 17), **characterized in**
the vehicle control arrangement further comprising a vehicle brake system (13) being connected to said control unit (7; 17), and
the control unit (7; 17) being configured to, upon receipt of a signal from the sensor system (1; 15) indicative of a collision or an expected collision with a pedestrian, cyclist or animal, send an activation signal to each of the pedestrian protection airbag (9) and the vehicle brake system (13), thereby activating the pedestrian protection airbag (9) and the vehicle brake system (13).

2. A vehicle control arrangement according to claim 1, wherein the sensor system (1; 15) is a frontal impact sensor system.

3. A vehicle control arrangement according to any of the preceding claims, wherein the pedestrian, cyclist or animal protection arrangement (3) comprises a hood lifter arrangement (21).

4. A vehicle control arrangement according to any of the preceding claims, wherein the sensor system (1) comprises at least one impact sensor indicative of a collision with a pedestrian, a cyclist or an animal.

5. A vehicle control arrangement according to claim 4, wherein the at least one impact sensor is an accelerometer, preferably a MEMS based accelerometer.

6. A vehicle control arrangement according to claim 1, wherein the sensor system (17) comprises at least one pre-crash sensor.

7. A vehicle control arrangement according to claim 6, wherein the at least one pre-crash sensor is a camera.

8. A vehicle control arrangement according to claim 7, wherein the camera is operable in the visible light wavelength range or in the infrared light wavelength range.

9. A vehicle control arrangement according to claim 6, wherein the at least one pre-crash sensor is an infra-red radar sensor.

10. A vehicle control arrangement according to any of the preceding claims, wherein the vehicle control means (5) comprises a vehicle steering system (25).

11. A vehicle control arrangement according to any of the preceding claims, wherein the control unit (7; 17) comprises a restraint systems control unit and/or a brake control unit (19) and/or a steering control unit (27).

12. A vehicle control arrangement according to any of the preceding claims, wherein the pedestrian, cyclist or animal protection arrangement (3) comprises a pair of pedestrian protection airbags, each of which is covering at least a part of a respective windshield pillar when inflated.

13. A vehicle control arrangement according to any of the preceding claims, wherein the pedestrian, cyclist or animal protection arrangement (3) comprises at least two pedestrian protection devices (9, 21).

## Patentansprüche

1. Fahrzeugsteueranordnung, umfassend:
ein Sensorsystem (1; 15) zum Erkennen einer Kollision oder einer erwarteten Kollision, wobei das Sensorsystem (1; 15) so ausgelegt ist, dass es einen Fußgänger, einen Fahrradfahrer oder ein Tier vor dem Fahrzeug erkennt,
eine Steuereinheit (7; 17), die so ausgelegt ist, dass sie ein Signal von dem Sensorsystem (1; 15) empfängt und verarbeitet, und
einen Fußgängerschutzairbag (9), der zumindest einen Teil der Trägerkonstruktion der Fahrzeugwindschutzscheibe bedeckt, wenn er aufgeblasen ist, und mit der Steuereinheit (7; 17) verbunden ist, **dadurch gekennzeichnet, dass**
die Fahrzeugsteueranordnung ferner ein Fahrzeugbremssystem (13) umfasst, das mit der Steuereinheit (7; 17) verbunden ist, und
die Steuereinheit (7; 17) so ausgelegt ist, dass sie beim Empfang eines Signals vom Sensorsystem (1; 15), das eine Kollision oder eine erwartete Kollision mit einem Fußgänger, Fahrradfahrer oder Tier anzeigt, ein Aktivierungssignal sowohl an den Fußgängerschutzairbag (9) als auch das Fahrzeugbremssystem (13) sendet, wodurch der Fußgängerschutzairbag (9) und das Fahrzeugbremssystem (13) aktiviert werden.

2. Fahrzeugsteueranordnung nach Anspruch 1, wobei das Sensorsystem (1; 15) ein Frontalaufprallsensorsystem ist.

3. Fahrzeugsteueranordnung nach einem der vorhergehenden Ansprüche, wobei die Fußgänger-, Fahrradfahrer- oder Tierschutzanordnung (3) eine Motorhaubenanhebeanordnung (21) umfasst.

4. Fahrzeugsteueranordnung nach einem der vorhergehenden Ansprüche, wobei das Sensorsystem (1) mindestens einen Aufprallsensor umfasst, der eine Kollision mit einem Fußgänger, einem Fahrradfahrer oder einem Tier anzeigt.

5. Fahrzeugsteueranordnung nach Anspruch 4, wobei der mindestens eine Aufprallsensor ein Beschleunigungssensor, vorzugsweise ein MEMS-Beschleunigungssensor ist.

6. Fahrzeugsteueranordnung nach Anspruch 1, wobei das Sensorsystem (17) mindestens einen Precrashsensor umfasst.

7. Fahrzeugsteueranordnung nach Anspruch 6, wobei der mindestens eine Precrashsensor eine Kamera ist.

8. Fahrzeugsteueranordnung nach Anspruch 7, wobei die Kamera im Wellenlängenbereich des sichtbaren Lichts oder im Wellenlängenbereich des Infrarotlichts betreibbar ist.

9. Fahrzeugsteueranordnung nach Anspruch 6, wobei der mindestens eine Precrashsensor ein Infrarotradarsensor ist.

10. Fahrzeugsteueranordnung nach einem der vorhergehenden Ansprüche, wobei das Fahrzeugsteuermittel (5) ein Fahrzeuglenksystem (25) umfasst.

11. Fahrzeugsteueranordnung nach einem der vorhergehenden Ansprüche, wobei die Steuereinheit (7; 17) eine Rückhaltesystem-Steuereinheit und/oder eine Bremssteuerungseinheit (19) und/oder eine Lenksteuerungseinheit (27) umfasst.

12. Fahrzeugsteueranordnung nach einem der vorhergehenden Ansprüche, wobei die Fußgänger-, Fahrradfahrer- oder Tierschutzanordnung (3) ein Paar Fußgängerschutzairbags umfasst, von denen jeder zumindest einen Teil einer jeweiligen Windschutzscheibensäule bedeckt, wenn er aufgeblasen ist.

13. Fahrzeugsteueranordnung nach einem der vorhergehenden Ansprüche, wobei die Fußgänger-, Fahrradfahrer- oder Tierschutzanordnung (3) mindestens zwei Fußgängerschutzvorrichtungen (9, 21) umfasst.

## Revendications

1. Agencement de contrôle de véhicule, comprenant
un système de capteurs (1 ; 15) destiné à détecter une collision ou une collision attendue, le système de capteurs (1 ; 15) étant adapté pour détecter un piéton, un cycliste ou un animal devant le véhicule,
une unité de contrôle (7 ; 17) adaptée pour recevoir et traiter un signal provenant dudit système de capteurs (1 ; 15), et
un coussin de sécurité gonflable de protection de piéton (9) recouvrant au moins une partie de la structure de support du pare-brise du véhicule quand il est gonflé et qui est relié à l'unité de contrôle (7 ; 17), **caractérisé en ce que**
l'agencement de contrôle de véhicule comprend en outre un système de freins de véhicule (13) qui est relié à ladite unité de contrôle (7 ; 17), et
l'unité de contrôle (7 ; 17) est configurée pour, lors de la réception d'un signal provenant du système de capteurs (1 ; 15) indiquant une collision ou une collision attendue avec un piéton, cycliste ou animal, envoyer un signal d'activation à chacun du coussin de sécurité gonflable de protection de piéton (9) et du système de freins de véhicule (13), activant ainsi le coussin de sécurité gonflable de protection de piéton (9) et le système de freins de véhicule (13).

2. Agencement de contrôle de véhicule selon la revendication 1, dans lequel le système de capteurs (1 ; 15) est un système de capteurs d'impact frontal.

3. Agencement de contrôle de véhicule selon l'une quelconque des revendications précédentes, dans lequel l'agencement de protection pour piéton, cycliste ou animal (3) comprend un agencement de levage de capot (21).

4. Agencement de contrôle de véhicule selon l'une quelconque des revendications précédentes, dans lequel le système de capteurs (1) comprend au moins un capteur d'impact indiquant une collision avec un piéton, un cycliste ou un animal.

5. Agencement de contrôle de véhicule selon la revendication 4, dans lequel l'au moins un capteur d'impact est un accéléromètre, de préférence un accéléromètre basé sur la technologie des MEMS.

6. Agencement de contrôle de véhicule selon la revendication 1, dans lequel le système de capteurs (17) comprend au moins un capteur de précollision.

7. Agencement de contrôle de véhicule selon la revendication 6, dans lequel l'au moins un capteur de précollision est une caméra.

8. Agencement de contrôle de véhicule selon la revendication 7, dans lequel la caméra peut fonctionner dans la gamme de longueur d'onde de lumière visible ou dans la gamme de longueur d'onde de lumière infrarouge.

9. Agencement de contrôle de véhicule selon la revendication 6, dans lequel l'au moins un capteur de précollision est un capteur radar à infrarouge.

10. Agencement de contrôle de véhicule selon l'une quelconque des revendications précédentes, dans lequel le moyen de contrôle de véhicule (5) comprend un système de direction de véhicule (25).

11. Agencement de contrôle de véhicule selon l'une quelconque des revendications précédentes, dans lequel l'unité de contrôle (7 ; 17) comprend une unité de contrôle de système de retenue et/ou une unité de contrôle de freins (19) et/ou une unité de contrôle de direction (27).

12. Agencement de contrôle de véhicule selon l'une quelconque des revendications précédentes, dans lequel l'agencement de protection de piéton, cycliste ou animal (3) comprend une paire de coussins de sécurité gonflables de protection de piéton, dont chacun recouvre au moins une partie d'un montant de pare-brise respectif quand il est gonflé.

13. Agencement de contrôle de véhicule selon l'une quelconque des revendications précédentes, dans lequel l'agencement de protection de piéton, cycliste ou animal (3) comprend au moins deux dispositifs de protection de piéton (9, 21).
